(19) Europäisches Patentamt
European Patent Office
Office européen des brevets

(11) **EP 4 198 939 A1**

(12) **EUROPEAN PATENT APPLICATION**

(43) Date of publication:
**21.06.2023 Bulletin 2023/25**

(21) Application number: **21306833.1**

(22) Date of filing: **17.12.2021**

(51) International Patent Classification (IPC):
**G08C 17/00** (2006.01)  **F24F 11/56** (2018.01)

(52) Cooperative Patent Classification (CPC):
**G08C 17/00;** F24F 11/56; G08C 2201/20;
G08C 2201/21; G08C 2201/92

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NETATMO**
**92100 Boulogne Billancourt (FR)**

(72) Inventors:
• **GABRIEL, Chadi**
**92160 Antony (FR)**

• **KAUFFMANN, Edouard**
**92130 Issy-les-Moulineaux (FR)**
• **BOLLUSET, Christophe**
**69007 Lyon (FR)**
• **SOBIESZCZYK, Laura**
**75006 Paris (FR)**
• **KAMOUN, Alexandre**
**75012 Paris (FR)**
• **BOURDON, Benoît**
**91450 Soisy sur Seine (FR)**

(74) Representative: **Atout PI Laplace**
**Immeuble "Visium"**
**22, avenue Aristide Briand**
**94117 Arcueil Cedex (FR)**

(54) **AUTOMATIC LEARNING OF A COMMUNICATION PROTOCOL FOR REMOTELY CONTROLLED AIR CONDITIONING SYSTEMS**

(57) The invention discloses a system comprising: a first remote controller comprising: at least one emitter of electromagnetic waves; at least one receiver of electromagnetic waves configured, during a training phase, to receive, from a second remote controller associated to an air conditioning (AC) system, electromagnetic waves carrying a plurality of data frames corresponding respectively to a plurality of defined commands of the AC system; at least one processing logic configured to: define, during said training phase, from said plurality of data frames corresponding to said plurality of defined commands of the AC system, a set of possible data frames corresponding respectively to a set of possible commands of the AC system defining a protocol of communication with the AC system; use, during an operating phase, said at least one emitter to send to the AC system, upon an input from a user to send one of the possible commands, electromagnetic waves carrying one of the possible data frames corresponding to said one of the possible commands.

## Fig. 2b

**Description**

FIELD OF THE INVENTION

The present invention relates to the field of the remote control of electric appliances. More specifically, it relates to the automatic learning of a communication protocol for remotely controlling air conditioning systems.

BACKGROUND PRIOR ART

Air Conditioning (AC) systems are used to improve the indoor comfort of persons. The AC systems are primarily used to control the temperature of a room or building, and are usually able to heat or cool the room or building. Some AC systems can also modify the air humidity, and use a fan to generate an air flow.

Many AC systems are controlled by a remote controller (RC) in which a user can remotely input commands to the AC. The commands may comprise a temperature setpoint, as well as other commands such as a mode of operation. The transmission of the commands from the RC to the AC system is in general performed using electromagnetic waves, for example using infrared LEDs, a radio communication, Li-Fi or a Wi-Fi network. Each pair of RC and AC system uses a communication protocol that defines how the commands are packaged within a message. Thus, each command defining a setpoint and other parameters such as a mode of operation, a fan speed, etc. can be packaged in a message sent from the RC to the AC system.

The different AC systems are furnished with different RCs using different protocols. The protocols may for example be specific to each AC system, or each AC vendor. The multitude of AC systems therefore results into a multitude of different remote controls. This situation is not convenient for the user, which must use substantially different RCs to control the different AC systems.

It is therefore desirable to benefit from a single, universal remote control for controlling many different types of AC systems.

In some case, the protocols defining the message formats and parameters for controlling AC systems are public. A purposely universal remote control for controlling many different types of AC systems can therefore implement these protocols in a straightforward manner.

However, the protocols defining the message formats and parameters for each AC system are not always known, and often proprietary.

Moreover, new AC systems using presently unknown protocols may be introduced after the manufacturing of a remote control.

In all these situations, the protocols of the AC cannot be implemented when manufacturing the remote control.

There is therefore the need of remote control for controlling AC systems, which is able to automatically learn the communication protocols used to control any kind of AC system.

SUMMARY OF THE INVENTION

To this effect, the invention discloses a system comprising: a first remote controller comprising: at least one emitter of electromagnetic waves; at least one receiver of electromagnetic waves configured, during a training phase, to receive, from a second remote controller associated to an air conditioning (AC) system, electromagnetic waves carrying a plurality of data frames corresponding respectively to a plurality of defined commands of the AC system; at least one processing logic configured to: define, during said training phase, from said plurality of data frames corresponding to said plurality of defined commands of the AC system, a set of possible data frames corresponding respectively to a set of possible commands of the AC system defining a protocol of communication with the AC system; use, during an operating phase, said at least one emitter to send to the AC system, upon an input from a user to send one of the possible commands, electromagnetic waves carrying one of the possible data frames corresponding to said one of the possible commands.

Advantageously, during a training phase, the user uses the second RC to successively send, in a defined order, each of the defined commands.

Advantageously, the system further comprises a user device connected to the first remote controller and configured to provide, upon an input from the user, instructions to the first remote controller to send to the AC system one of said defined commands.

Advantageously, the user device is further configured, during the training phase, to provide instructions to the user to send each of the defined commands, in the defined order.

Advantageously, the remote controller comprises at least one sensor of humidity or temperature, and is configured to send to said user device measurements of said at least one sensor; said user device: comprises a display screen, and is configured to display said measurements to the user; or is configured to automatically send instructions to the first remote controller to send to the AC system one of said defined commands in order to reach at least one of a temperature or a humidity setpoint.

Advantageously, the format of each data frame is defined by the protocol of communication with the AC system, each data frame comprising of: a header section; a payload section, comprising, in a defined order, values of a set of parameters of operations of the AC system.

Advantageously, the at least one processing logic has access to a database of protocols of communication with AC systems, and wherein said at least one processing logic is configured, during said training phase, when receiving a data frame that belongs to a protocol found in the database, to define a set of possible data frames corresponding respectively to a set of possible commands of the AC system defined by said protocol found in the database.

Advantageously, the plurality of defined commands comprise, for each possible parameter of said set of parameters of operations of the AC system, at least two defined commands corresponding to two different values of the possible parameter.

Advantageously, the plurality of defined commands comprises at least one possible command for each possible value of a possible parameter exhibiting symbolic values respectively.

Advantageously, the plurality of defined commands comprises at least two possible commands representing respectively at least two different numerical values of a possible parameter exhibiting numerical values.

Advantageously, the at least one processing logic is configured, during the training phase, to: obtain a first numerical value $n_1$ in a first data frame corresponding to a first defined value $v_1$ of the possible parameter; obtain a second numerical value $n_2$ in a second data frame corresponding to a second defined value $v_2$ of the possible parameter; for each possible numerical value $n_3$ between the first numerical value and the second numerical value, define possible data frames having said possible numerical value $n_3$, associated with a possible command having a value of the possible parameter equal to:

$$v_3 = v_1 + \frac{n_3 - n_1}{n_2 - n_1} * (v_2 - v_1)$$

.

Advantageously, at least one of the first value or the second value is a minimum value or a maximum value of the possible parameter.

Advantageously, the at least one processing logic is configured to define the set of possible data frames as a set of all possible combinations of all possible values of the parameters.

Advantageously, said first remote controller is a remote controller comprising said at least one processing logic.

Advantageously, during the training phase, said at least one processing logic configured to detect incorrect data frames.

The invention also discloses a computer-implemented method comprising: receive, during a training phase, by at least one receiver of electromagnetic waves of a first remote controller and from a second remote controller associated to an air conditioning (AC) system, electromagnetic waves carrying a plurality of data frames corresponding respectively to a plurality of defined commands of the AC system; define, during said training phase, from said plurality of data frames corresponding to said plurality of defined commands of the AC system, a set of possible data frames corresponding respectively to a set of possible commands of the AC system defining a protocol of communication with the AC system; use, during an operating phase, at least emitter of electromagnetic waves of the first remote controller to send to the AC system, upon an input from a user to send one of the possible commands, electromagnetic waves carrying one of the possible data frames corresponding to said one of the possible commands.

The invention also discloses a computer program product comprising computer code instructions which, when the program is executed by the system of one of the embodiments of the invention, cause the system to carry out the steps of one of the embodiments of the invention.

BRIEF DESCRIPTION OF THE DRAWINGS

The invention will be better understood and its various features and advantages will emerge from the following description of a number of exemplary embodiments provided for illustration purposes only and its appended figures in which:

- Figure 1 represents an example of an air conditioning system for the control of which the invention can be implemented;
- Figure 2a represents an example of system in which the invention may be implemented, during an operative phase;
- Figure 2b represents an example of system in which the invention may be implemented, during a learning phase;
- Figure 3 represents an example of a first remote controller in a number of embodiments of the invention;
- Figure 4 represents examples of snapshots of a user interface of a user device during a training phase in a number of embodiments of the invention;

- Figure 5 represents an example of a computer-implemented method in a number of embodiments of the invention.

DETAILED DESCRIPTION OF THE INVENTION

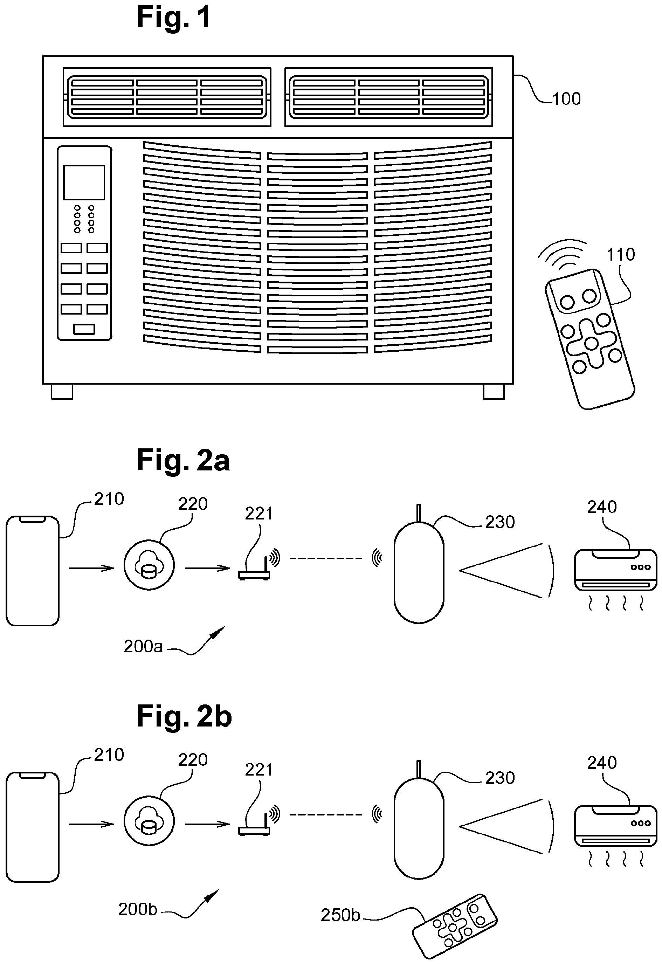

The Figure 1 represents an example of an air conditioning system for the control of which the invention can be implemented.

The air conditioning (AC) system 100 is able to cool the ambient air, and therefore cool a room or a building. To do so, the air conditioning system may comprise one or more fans and use different techniques, such as vapor-compression refrigeration or a air source heat pump. The air conditioning system 100 may also be able to heat the ambient air, use a fan to make the air flow, and/or modify the humidity of the ambient air.

The AC system 100 is controlled by a remote control (RC) 110. The RC 110 may send commands to the AC system 100 using a plurality of different channels that allow carrying information, for example using infrared LED, a radio connection, a Li-Fi or Wi-Fi connection. More generally, the RC 110 sends commands to the AC 100 using electromagnetic waves.

Each command defines all or a subpart of the parameters that the AC requires to operate, in particular:

- A temperature setpoint that defines a target temperature to reach. The AC system may either cool or heat the ambient air to reach the temperature, if the air is hotter or colder than the temperature setpoint respectively;
- A mode of operation of the AC system, which defines what the AC system needs to do. Usual modes of the AC system may for example comprise the following modes (the modes below are provided by means of non-limitative example only of the modes that may be used by a AC system):

    - Hot: heats the ambient air;
    - Cold: cools the ambient air;
    - Fan: turns ON or OFF the fan;
    - Dry: removes humidity from the ambient air;
    - Ventilation power modes;
    - Modes relative to the orientation of the ventilation flats, suc has swing or slat positions);
    - Eco mode : limits the power consumption of the AC system;
    - Quiet mode: limits the noise generated by the AC system;

- Parameters that are not linked to AC, but are managed by the AC system 100, such as light or sound parameters.

In the figure 1, the RC 110 is a RC which is sold with the AC system 100, and is tied to the AC system 100. Therefore, the RC 110 can only control the AC system 100. This situation is not always convenient for the user, because the capacity of a user to control different AC is restricted by the need to use many different RCs, that all need to by physically close to the AC system they are tied to.

One of the objectives of the invention is to improve this situation, and to provide the user with a universal RC able to control many different types of devices. More specifically, the invention aims at allowing a RC to automatically learn the protocol used between a previously unknown AC system, and the RC which is tied to this system.

The figure 2a represents an example of system in which the invention may be implemented, during an operative phase.

The system 200a comprises an AC system 240, which may be for example the AC system 100. In the example of figure 2a, the AC system 240 is formed by a single device, but, in other embodiments of the invention, the AC system may be formed of a plurality of devices operating together.

The system 200a further comprises a universal RC 230 which is able to control the AC system 100. The universal RC 230 uses the same type of electromagnetic waves than the RC which is sold with the AC system 240. In the example of figure 2a, the RC 230 uses infrared LED, but the invention is not restricted to this example, and any suitable type of electromagnetic waves may be used.

In the example of figure 2a, the RC 230 is itself controlled remotely by a user device 210. In this example, the user device 210 is a smartphone, but the invention is not restricted to this example, and any kind of user device, such as a tablet, a personal computer, or a smartwatch can be used.

To this effect, the RC 230 is connected to the user device 210. In this example, the connection is performed by a cloud service 220 and a local router 221 nearby the RC 230. However, the invention is not restricted to this example, and any suitable kind of connection may be used. Of course, this is provided by means of non-limitative example only, and the connection between the RC 230 and the user device 210 may be performed in many other ways, such as a local router, and/or a Bluetooth connection.

The user device 210 can therefore send instructions to the RC 230 to command the AC system 240, for example by letting the user entering instructions using an application or a webpage.

This conveniently allows a user to control the AC system using a friendly interface from any location where an internet connection is available.

In a number of embodiments of the invention, the user device 210 and the RC 230 can communicate bi-directionally: the user device 210 can send commands to the RC, but also receive information from sensors onboard the RC 230.

For example, the RC 230 can be equipped with temperature or humidity sensors, and provide the measurements to the user device 210, so that the user can be aware of the current state of the ambient air. Other information can be transmitted, such as the current setpoint temperature or operating mode of the AC system 240. Other sensors (for example, temperature or humidity sensors in the same room but not onboard the RC 230) may also be connected to the router 221, and send their measurements to the user device 210.

Therefore, the user can not only send instructions, but also be aware of the current situation of the ambient air in a room from any place, in order to perform a better control of the AC system 240.

The figure 2b represents an example of system in which the invention may be implemented, during a learning phase.

The system 200b comprises all the elements of the system 200a. In addition, the system 200b comprises a second RC 250b associated to the AC system 240. The second RC is typically a RC which is sold with and tied the AC system 240.

In a learning phase, the first RC 230 and the second RC 250b are located nearby, so that the electromagnetic waves emitted by the second RC 250b can be received by the first RC 230, and the corresponding data frames decoded. A user is instructed to provide a defined sequence of inputs to the second RC 250b, so that the corresponding messages are emitted by the second RC 250. The first RC 230 can thus receive the messages. The analysis of the data frames, associated with the knowledge of what was the corresponding sequence of inputs, allows the system 200b to infer what is the protocol used to define the messages, as will be explained in more details hereinafter.

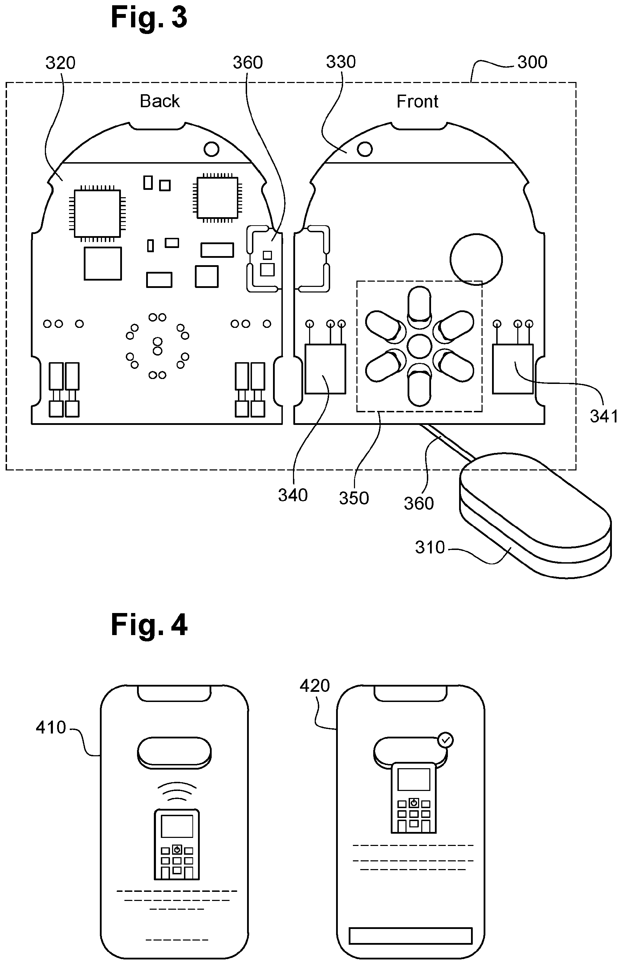

Figure 3 represents an example of a first remote controller in a number of embodiments of the invention.

The figure 3 represents a first remote controller 300, which is an example of the first remote controller 230.

The first RC 300 can be placed at proximity of the AC system 100, in order to control it, for example placed on a wall near the AC system 100. The first RC 300 can be powered using a wire 360, and/or batteries. The wire can be for example be plugged to a USB or micro-USB port to charge the batteries.

The remote controller 300 is packaged within a housing, and comprises an electric board with an back face 320 and a front face 330.

In the example of figure 3, the communication between the remote controllers and the AC system are performed by infrared emitters (for example LEDs) that can be switched ON or OFF at a defined frequency, in order to send 0 or 1 bits, and infrared receivers.

The first RC 300 comprises 2 infrared receivers 340, 341, and 7 infrared emitters 350. The infrared receivers 340 and 341 allow receiving infrared signals emitted by the second RC 250b, in order to decode the messages sent by the RC 250b and corresponding to defined commands, in order to learn the protocol. In a number of embodiments of the invention, they also allow receiving messages from the AC system, when a bi-directional communication with the AC system 100 is possible.

The infrared emitters 350 are for example LEDs that are able to emit infrared light, and can be used to send messages to the AC system 100.

The infrared receivers and emitters of figure 100 are provided by means of non-limitative example only of emitters and receivers of electromagnetic waves. More generally, a first RC of the invention comprises at least one emitter of electromagnetic waves and at least one receiver of electromagnetic waves, provided that the emitter and receiver of electromagnetic waves are able to emit/receive the same kinds of electromagnetic waves than those exchanged between the second RC 250b and the AC system 240. For example, the first RC 300 may comprise LEDs able to emit visible light if Li-Fi communication is used, radio emitters and receivers if radio communication is used, etc. The emitters and receivers of electromagnetic waves are able to send and receive data frames that correspond to messages and/or commands exchanged between the remote controls and the AC systems. Of course, a different number of emitters or receivers may be used.

In a number of embodiments of the invention, the first RC 300 is equipped with communication capabilities to communicate with cloud services 220, and/or a user device 210. For example, the first RC 300 can use Wi-Fi to connect to a router 221, for example a Wi-Fi gateway to communicate the cloud 220 and user device 210.

In a number of embodiments of the invention, the first RC 300 is equipped with sensors, for example a humidity and a temperature sensors 360. This allows having a knowledge of the humidity and/or temperature at the location of the AC system. For example, these measures can be transmitted to the user device 210 which is equipped with a display screen to display the temperature and/or humidity measures to the user, so that the user is aware of the current situation, and can adjust the control of the AC if needed. These measures can also automatically trigger changes in the control of the AC, for example a change of the mode of the AC system. Rules of automatic changes of the control of the AC may either be implemented within the RC itself, or within the user device, and may for example consist in sending instructions to the first RC to send commands to the AC system to reach at least one of a temperature or a humidity setpoint.

This allows adjusting the control of the AC system in order to obtain the desired temperature and/or humidity parameters in a room.

As explained above, in a learning phase, the first RC receives, for example though the receivers 340, 341 electromagnetic waves emitted by the second RC 250 that carry data frames corresponding to a plurality of defined commands.

A system of the invention comprises at least processing logic configured to:

- define, during the training phase, from said plurality of data frames corresponding to said plurality of defined commands of the AC system, a set of possible data frames corresponding respectively to a set of possible commands of the AC system defining the protocol of communication with the AC system This corresponds to the learning phase, where the possible commands define the protocol used to communicate with the AC system, and the defined commands form a subset of the possible commands. One of the objectives of the invention is to determine a complete set of all the commands to communicate with the AC system from a subset of all the possible commands;
- use, during an operating phase, said at least emitter to send to the AC system, upon an input from a user to send one of the possible commands, electromagnetic waves carrying one of the possible data frames corresponding to said one of the possible commands. This corresponds to the operating phase, wherein the first RC 300 is used to actually command the AC system.

According to various embodiments of the invention, a processing logic may be a processor operating in accordance with software instructions, a hardware configuration of a processor, or a combination thereof. It should be understood that any or all of the functions discussed herein may be implemented in a pure hardware implementation and/or by a processor operating in accordance with software instructions. It should also be understood that any or all software instructions may be stored in a non-transitory computer-readable medium.

The at least be processing logics may therefore be for example a plurality of processors, and/or a plurality of processing core.

According to various embodiments of the invention, the at least one processing logics may be located in the first RC 230, 300, the user device 210, and/or the cloud 220.

The location of the processing logic may also depend from the operations performed. For example, the learning phase may primarily be performed by the cloud 220, and the operating phase by the user device 210 and the first RC 230, 300.

Figure 4 represents examples of snapshots of a user interface of a user device during a training phase in a number of embodiments of the invention.

As explained above, during the training phase, the first RC 230, 300 receives, from the second RC 250b, electromagnetic waves carrying a plurality of data frames corresponding respectively to a plurality of defined commands of the AC system.

To this effect, a user can be required to use the second RC 250b, for example by pressing buttons, to successively send, in a defined order, each of the defined commands.

This allows associate each data frame received from the second RC 250b to a defined command. Indeed, since the sequence of the defined commands is known, each defined command can be associated with a received data frame.

This can be achieved in different ways.

For example, the user can be provided with a list of successive commands to send using the second RC 250b.

In a number of embodiments of the invention, the user device 210 is configured, during the training phase, to provide instructions to the user to send each of the defined commands, in the defined order.

This provides to the user a convenient solution to send the defined commands.

For example, in the example of figure 4, the user device 210 is provided with an application that provides the user visual instructions of the operations to perform during the training phase.

For example, a first snapshot 410 instructs the user to orient the second RC 250b towards the first RC 230, 300 and press the "Power" of the second RC 250b button few times". This step allows ensuring that the second RC 250b is actually oriented towards the first RC 230, 300.

Then, a plurality of successive screens, not represented in figure 4, successively instruct the user to press buttons corresponding to each of the defined commands. On or more screens may be presented to the user to send the successive commands, a screen providing to the user instructions to send one or more commands. A screen may for example request the user to a plurality of commands corresponding to a same mode, but different temperatures.

When all the frames corresponding to all the defined commands are received, a screen 420 indicates to the user that the setup is complete. The received frames can then be analyzed in order to determine the complete set of possible commands that define the protocol of control of the AC system.

As explained above, the first RC 230, 300 is equipped with emitters and receivers of electromagnetic waves that are configured to emit or receive data frames corresponding to commands and/or messages exchanged between the remote controllers and the AC system.

In general, the exchanges between the RC and the AC rely on two successive level of data frames:

- the physical data frames, which comprise:

  ○ a header comprising elementary signal pairs allowing emitters and receivers to synchronize;
  ○ payload: this is the part of the physical data frame tha can be converted into binary information, which forms the binary data frame;

- The binary data frame, that comprises the data that can be interpreted by the AC system. In the current disclosure, the notion of "protocol" applies to the definition of the binary data frames, independently of the physical data frames that are used for carrying the signal containing the binary data frames.

The invention relies on the assumptions that, for each protocol used by each AC system, the data frames comprise the following sections:

- A header. This header defines indicates which protocol is used, and any comprise other information such as the manufacturer, the model;
- A payload section, wherein the value is defined for each parameter of operation of the AC system. For example, if the operation of the AC system is defined by a mode of operation and a setpoint temperature, the payload section of each data frame comprises:

  ○ A definition of the mode of operation of the AC system;
  ○ Then a definition of the setpoint temperature;
  ○ In addition, other parameters may be present. For example, all of the parameters discussed with reference to figure 1 may be used.

- Optionally, a control block allowing to verify the integrity of the frames, for example using a checksum, CRC (cyclic redundancy check) or another code allowing to verify that the received data frame is correct.

Stated otherwise, each protocol of communication with an AC system defines a format of data frames, comprising a header, and a payload section wherein the values of the parameters of operation of the AC system are found. For example, if, in a given protocol, the payload section comprises a value defining the mode of operation of the AC system, then a setpoint temperature, each data frame complying with this protocol will always comprise the header, the value of the mode, then the value of the setpoint temperature in the same order. Therefore, the different allowable values of the mode and temperature can be combined to form a complete set of possible data frames corresponding to all possible commands that can be sent to an AC system.

The data frame comprises a header, and a payload section.

In a number of embodiments of the invention, the at least one processing logic has access to a database of protocols of communication with AC systems, and said at least one processing logic is configured, during said training phase, when receiving a data frame that belongs to a protocol found in the database, to define a set of possible data frames corresponding respectively to a set of possible commands of the AC system defined by said protocol found in the database.

Stated otherwise, certain protocols are already known. For these protocols, all the possible commands, and associated data frames are therefore also known. When the second RC 250b uses a known protocol to communicate with the AC system 240, the header of the data frames can be, during the training phase; identified as belonging to one of the known protocols. In such case, the training phase can be completed without needing to receive any further frame, and the possible commands and data frames to be used by the first RC 230 during the operational phase can be set according to the known protocol.

This allows benefiting from a previous knowledge of existing protocols to drastically reduce the time spent in the learning phase.

This is especially suitable for embodiment of the invention wherein the learning phase is performed by the user device 210, or even more by the cloud 220.

Furthermore, if the protocol is not already known, a full training phase can be performed, and the learnt protocol can enrich the database. Therefore, when a plurality of users use the same database (for example, a large number of users relying on the same cloud service), an extended knowledge of the existing protocols can be rapidly obtained.

In a number of embodiments of the invention, the plurality of defined commands comprise, for each possible parameter of said set of parameters of operations of the AC system, at least two defined commands corresponding to two different values of the possible parameter.

Stated otherwise, the plurality of defined commands that the second RC 250b will send during the training phase (for example upon successive inputs from a user) comprises, for each possible parameter (e.g setpoint temperature, operating mode, etc.) at least two defined commands corresponding to two different values of the possible parameter - for example, at least two commands with two different setpoint temperatures, and at least two different commands with two different operating modes.

This allows detecting which parameters are used, and in which part of the payload section are found their values.

Indeed, if a possible parameter is not used (for example, if an AC system uses a single mode of operation, the corresponding protocol will not take into account a protocol parameter), the change of value of the mode of operation will not have any impact on the data frame that is sent. The detection of this absence of impact provides an indication that this possible parameter is actually not used by the protocol.

On the contrary, if a parameter is used, the change of value of the parameter impacts the part of the payload section that holds the value of this parameter. Therefore, the detection of the change of the part of the payload section indicates that the possible parameter is used, and the part of the payload section that holds the values of this parameter.

In a number of embodiments of the invention, the plurality of defined commands comprises at least one possible command for each possible value of a possible parameter exhibiting symbolic values respectively.

Stated otherwise, for a given possible parameter exhibiting symbolic values (for example, the mode of operation of the AC system), the possible commands comprise at least one command for each value of the parameter. For example, at least one command is issued for each possible mode of operation. A parameter exhibiting symbolic values can be defined as a parameter whose values define a symbolic signification, by opposition to numerical values. For example the modes of operations "cold", "hot" or "dry" correspond to symbolic values representing the intended use of the AC system.

For example, the set of possible commands may thus comprise at least one command defining any foreseeable possible mode of operation of the AC system. Therefore, the modes that are actually present in the protocol can be detected, because the possible command modifies the data frames that are sent, and the corresponding binary representation of the mode can also be obtained in the data frame corresponding to the command associated to the mode.

This allows obtaining an exact knowledge of the values the parameter can take, and their exact binary representation in the data frames. This solution is especially suited for the parameters that are defined by symbolic values, such as the mode of operation of the AC system: all the modes of operations that the AC system used can be known, as well as their corresponding binary coding in the data frames.

In a number of embodiments of the invention, the plurality of defined commands comprises at least two possible commands representing respectively at least two different numerical values of a possible parameter exhibiting numerical values.

A possible parameter exhibiting numerical values is a possible parameter whose values are expressed as a number. For example, the setpoint temperatures can be expressed in degrees, and therefore as numerical values. Stated otherwise, for such a parameter, the possible commands comprise at least two different values of the parameters (for example, at least two setpoint temperatures, for example 20° and 25°).

This allows inferring the numerical representation of the values, and therefore define the data frames corresponding to the commands associated with other numerical values of the parameter.

Therefore, the data frames corresponding to all the numerical values can be obtained even when receiving a limited number of data frames corresponding to a limited number of values from the second RC 250b.

Therefore, all the values of the parameters (for example, all the temperatures) can be used even with a limited training phase wherein the user is requested to enter only a limited number of values, for example a limited number of different temperatures.

In a number of embodiments of the invention, the at least one processing logic is configured, during the training phase, to:

- obtain a first numerical value $n_1$ in a first data frame corresponding to a first defined value $v_1$ of the possible parameter;
- obtain a second numerical value $n_2$ in a second data frame corresponding to a second defined value $v_2$ of the possible parameter;

- for each possible numerical value $n_3$ between the first numerical value and the second numerical value, define possible data frames having said possible numerical value $n_3$, associated with a possible command having a value of the possible parameter equal to:

$$v_3 = v_1 + \frac{n_3 - n_1}{n_2 - n_1} * (v_2 - v_1)$$

.

To provide a concrete example, if the parameter *"setpoint temperature"* is defined by an integer numerical value $n$ in the data frame, and, during the training phase, we have:

- A first data frame corresponding to a command with a setpoint temperature $t_1 = 20°$, with the corresponding integer value in the frame $n_1 = 3$;
- A second data frame corresponding to a command with a setpoint temperature $t_2 = 25°$, with the corresponding integer value in the frame $n_1 = 8$.

It is possible to infer that the 8-3-1 = 4 values of setpoints temperatures are found in between, which can therefore be coded as:

- a setpoint temperature $t_3 = 21°$, with the corresponding integer value in the frame $n_3 = 4$;
- a setpoint temperature $t_4 = 22°$, with the corresponding integer value in the frame $n_4 = 5$;
- a setpoint temperature $t_5 = 23°$, with the corresponding integer value in the frame $n_5 = 6$;
- a setpoint temperature $t_6 = 24°$, with the corresponding integer value in the frame $n_6 = 7$.

In a number of embodiments of the invention, at least one of the first value or the second value is a minimum value or a maximum value of the possible parameter.
Stated otherwise, when, in the learning phase, defined commands with values of a parameter are considered, the values of the parameter can comprise a minimum and/or a maximum value of the parameter.
Indeed, some parameters may be usable in a range between a minimum and a maximum value. Typically, AC systems usually operate between an minimum value $t_{mion}$ and a maximum value $t_{max}$.
Learning these values, and the associated binary representation in the data frame during the learning phase allows:

- Implementing within the protocol of communication the minimum and maximum values of the parameter;
- Being able to reconstitute all possible values of the parameter between the minimum and the maximum value.

In a number of embodiments of the invention, the at least one processing logic is configured to define the set of possible data frames as a set of all possible combinations of all possible values of the parameters.
Stated otherwise, as explained above, in the learning phase, the various values that the parameters can take can be learnt, as well as their binary representations in the data frames. These values can be combined to define a set of all possible commands and the associated frames that define the protocol.
This allows obtaining a set of all possible frames of the protocol, even when the training phase has been applied on a limited number of frames, and thus using a limited input from the user.
To give e concrete example, let's consider a case wherein two parameters are used:

- A mode of operation m with a value of the parameter chosen among five values $\{m_1, m_2, m_3, m_4, m_5\}$;
- A temperature setpoint t with a value of the parameter chosen among ten values $\{t_1 \dots t_{10}\}$.

The allowable values, and corresponding binary representations can be identified, as explained above, using a limited number of frames received, and thus limited inputs from the user.
Conversely, a complete set of possible data frames corresponding to a complete set of possible commands to send to the AC system can be defined. In this example, 5 x 10 = 50 possible commands / data frames exist. This number is much higher than then number of inputs actually required from the user during the learning phase.
To provide a concrete example, let's imagine that a protocol is defined by frames that carry a binary message of 8 bits, whose payload comprise:

- a first bit indicating if the AC system is ON (binary value 1), or OFF (binary value 0);
- a second bit defining a fan mode: fast (binary value 1), or slow (binary value 0);
- the third to fifth bits coding the temperature as an unsigned integer between 0 and 7, corresponding respectively to the temperature ranging from 18° to 25° with a granularity of 1°.

This example is of course a very simple example having a non-limitative illustrating purpose. This provides an example of a protocol which is simpler than the usual protocols, in order to ease the understandability of the example.

In this example, the user can be requested to enter the defined command below corresponding to the following binary messages:

| Defined command | Received data frame |
|---|---|
| 1) System OFF, fan mode slow, temperature min | 00000 |
| 2) System ON, fan mode slow, temperature min | 10000 |
| 3) System ON, fan mode fast, temperature min | 11000 |
| 4) System ON, fan mode fast, temperature max | 11111 |
| 5) System ON, fan mode fast, temperature 19° | 11001 |
| 6) System ON, fan mode fast, temperature 25° | 11111 |

The comparison between received frames allows determining which role is played by each bit in the frames. For example:

Between commands 1) and 2), the only change in the command is that the system is turned ON, and the only bit that changes is the first one, that changes from value 0 to value 1. It is therefore possible to infer that the first bit codes for the status of the system (0: OFF; 1: ON).

Between commands 2) and 3), the only change in the command is that the fan mode switches from "slow" to "fast", and the only bit that changes is the second one, which changes from value 0 to value 1. It is therefore possible to infer that the second bit codes for the fan (0: slow; 1: fast).

Between commands 3) and 4), the only change in the command is that the temperature switches from "min" to "max", and the third to fifth bit change from values 000 to 111, It is therefore possible to infer that the third to fifth bits codes for the temperature, on an eight-value scale, from 000 (unsigned integer value: 0) to 111 (unsigned integer value: 7).

In commands 5) and 6), it can be seen that the third to fifth bits code the unsigned integer value 1 (binary value 001) for the temperature 19°, and the unsigned integer value 7 (binary value 111) for the temperature 25°, Thus, it can be inferred that a difference of 6 in the unsigned integer value codes for a difference of 6°, and thus the granularity of the temperatures is 1°, while the maximum value of the temperature is 25°. Thus, the complete range of commands for the temperature can be retrieved:

| Binary Value | Integer Value | Temperature |
|---|---|---|
| 000 | 0 | 18° |
| 001 | 1 | 19° |
| 010 | 2 | 20° |
| 011 | 3 | 21° |
| 100 | 4 | 22° |
| 101 | 5 | 23° |
| 110 | 6 | 24° |
| 111 | 7 | 25° |

It is also possible to note that a modification of any other possible parameter, such as the swing mode for example, will not result into any change in the data frames. Thus, it can be inferred that no other parameter is used.

By combining the possible values of each of the parameters (System ON/OFF, fan mode, temperature), it is possible to obtain the set of possible commands that define the complete protocol:

| Possible command | Possible data frame |
|---|---|
| System OFF, fan mode slow, temperature min / 18° | 00000 |
| System OFF, fan mode slow, temperature 19° | 00001 |
| System OFF, fan mode slow, temperature 20° | 00010 |

(continued)

| Possible command | Possible data frame |
|---|---|
| System OFF, fan mode slow, temperature 21° | 00011 |
| System OFF, fan mode slow, temperature 22° | 00100 |
| System OFF, fan mode slow, temperature 23° | 00101 |
| System OFF, fan mode slow, temperature 24° | 00110 |
| System OFF, fan mode slow, temperature max / 25° | 00111 |
| System OFF, fan mode fast, temperature min / 18° | 01000 |
| System OFF, fan mode fast, temperature 19° | 01001 |
| System OFF, fan mode fast, temperature 20° | 01010 |
| System OFF, fan mode fast, temperature 21° | 01011 |
| System OFF, fan mode fast, temperature 22° | 01100 |
| System OFF, fan mode fast, temperature 23° | 01101 |
| System OFF, fan mode fast, temperature 24° | 01110 |
| System OFF, fan mode fast, temperature max / 25° | 01111 |
| System ON, fan mode slow, temperature min / 18° | 10000 |
| System ON, fan mode slow, temperature 19° | 10001 |
| System ON, fan mode slow, temperature 20° | 10010 |
| System ON, fan mode slow, temperature 21° | 10011 |
| System ON, fan mode slow, temperature 22° | 10100 |
| System ON, fan mode slow, temperature 23° | 10101 |
| System ON, fan mode slow, temperature 24° | 10110 |
| System ON, fan mode slow, temperature max / 25° | 10111 |
| System ON, fan mode fast, temperature min / 18° | 11000 |
| System ON, fan mode fast, temperature 19° | 11001 |
| System ON, fan mode fast, temperature 20° | 11010 |
| System ON, fan mode fast, temperature 21° | 11011 |
| System ON, fan mode fast, temperature 22° | 11100 |
| System ON, fan mode fast, temperature 23° | 11101 |
| System ON, fan mode fast, temperature 24° | 11110 |
| System ON, fan mode fast, temperature max / 25° | 11111 |

Of course, this is provided by means of example only, and the combination of possible commands becomes even more important when more than 2 parameters are used, and when some of the parameters exhibit a large number of possible values. In many cases, hundreds of possible commands may be used. For example In a number of embodiments of the invention, the user is inventive to enter defined commands that correspond to the following parameters in the following order, which is provided by means of non-limitative example only:

- Set the AC system ON/OFF;
- Temperature;
- Fan mode;
- Swing mode.

In most cases, the frames that are received during the learning phase correspond exactly to the frames that have been emitted by the second RC 250b. However, in some cases the frames can be corrupted. It can be for example the case if other devices emit electromagnetic waves in the vicinity of the remote controls.

In order to prevent the frames of the protocol to be reconstructed on the ground of an incorrect input, in a number of embodiments of the invention, during the training phase, the at least one processing logic configured to detect incorrect data frames.

Therefore, incorrect data frames can be detected, and either corrected or dismissed. If the data frame is dismissed, the user can be requested to re-enter the corresponding defined command in order to obtain the corresponding correct data frame.

The detection can be made either on physical or binary data frames.

Incorrect data frames can be for example detected:

- If the size of the data frame does not match the expected data frame size, and/or if aberrant values are found in the frames. If the size of the data frame exceeds the expected size, and aberrant values are found, the aberrant values can be removed. If, when removing the aberrant values, the size of the frame matches the expected size, it can be inferred that he aberrant values have been added to the frame, and the frame with the removed aberrant values can be kept;
- The user can be request to enter each command twice. Thus, the two received frames for the same command can be compared to check whether they are identical. If it is not the case, the user can be requested to enter again the same command to resolve the inconsistency;
- If they are present in the protocol, CRCs or checksums can be used to verify if a frame has been corrupted or not.

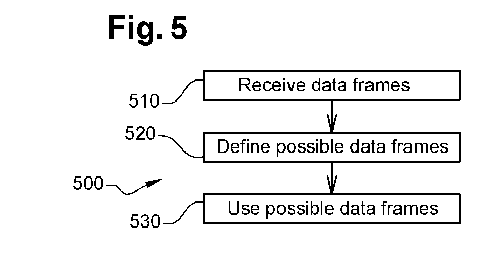

The figure 5 represents an example of a computer-implemented method in a number of embodiments of the invention.

The method 500 is a computer-implemented method which can be for example executed by the system of figures 2a/2b.

The method 500 comprises a first step5 of receiving, during a training phase, by at least one receiver of electromagnetic waves 340, 341 of a first remote controller 230 and from a second remote controller 250b associated to an air conditioning (AC) system 240, electromagnetic waves carrying a plurality of data frames corresponding respectively to a plurality of defined commands of the AC system.

The method 500 comprises a second step 520 of defining, during said training phase, from said plurality of data frames corresponding to said plurality of defined commands of the AC system, a set of possible data frames corresponding respectively to a set of possible commands of the AC system defining a protocol of communication with the AC system.

The method 500 comprises a third step 530 of using, during an operating phase, at least emitter of electromagnetic waves 350 of the first remote controller to send to the AC system, upon an input from a user to send one of the possible commands, electromagnetic waves carrying one of the possible data frames corresponding to said one of the possible commands.

The examples described above are given as non limitative illustrations of embodiments of the invention. They do not in any way limit the scope of the invention which is defined by the following claims. Moreover, all non-exclusive embodiments discussed above can be combined.

**Claims**

1. A system (200a, 200b) comprising:

    - a first remote controller (230) comprising:

        ◦ at least one emitter of electromagnetic waves (350);
        ◦ at least one receiver of electromagnetic waves (340, 341) configured, during a training phase, to receive, from a second remote controller (250b) associated to an air conditioning (AC) system (240), electromagnetic waves carrying a plurality of data frames corresponding respectively to a plurality of defined commands of the AC system;

    - at least one processing logic configured to:

        ◦ define, during said training phase, from said plurality of data frames corresponding to said plurality of defined commands of the AC system, a set of possible data frames corresponding respectively to a set of possible commands of the AC system defining a protocol of communication with the AC system;
◦ use, during an operating phase, said at least one emitter to send to the AC system, upon an input from a user to send one of the possible commands, electromagnetic waves carrying one of the possible data frames corresponding to said one of the possible commands.

2. The system of claim 1, wherein, during a training phase, the user uses the second RC (250b) to successively send, in a defined order, each of the defined commands.

3. The system of any of the preceding claims, further comprising a user device (210) connected to the first remote controller and configured to provide, upon an input from the user, instructions to the first remote controller to send to the AC system one of said defined commands.

4. The system of claim 3, depending upon claim 2, wherein the user device is further configured, during the training phase, to provide instructions to the user to send each of the defined commands, in the defined order.

5. The system of one of claims 3 or 4, wherein:

   - the remote controller comprises at least one sensor of humidity or temperature, and is configured to send to said user device measurements of said at least one sensor;
   - said user device:

      ◦ comprises a display screen, and is configured to display said measurements to the user; or
      ◦ is configured to automatically send instructions to the first remote controller to send to the AC system one of said defined commands in order to reach at least one of a temperature or a humidity setpoint.

6. The system of any of the preceding claims, wherein the format of each data frame is defined by the protocol of communication with the AC system, each data frame comprising of:

   - a header section;
   - a payload section, comprising, in a defined order, values of a set of parameters of operations of the AC system.

7. The system of claim 5, wherein the at least one processing logic has access to a database of protocols of communication with AC systems, and wherein said at least one processing logic is configured, during said training phase, when receiving a data frame that belongs to a protocol found in the database, to define a set of possible data frames corresponding respectively to a set of possible commands of the AC system defined by said protocol found in the database.

8. The system of one of claims 6 or 7, wherein the plurality of defined commands comprise, for each possible parameter of said set of parameters of operations of the AC system, at least two defined commands corresponding to two different values of the possible parameter.

9. The system of claim 8, wherein the plurality of defined commands comprises at least one possible command for each possible value of a possible parameter exhibiting symbolic values respectively.

10. The system of one of claims 8 or 9, wherein the plurality of defined commands comprises at least two possible commands representing respectively at least two different numerical values of a possible parameter exhibiting numerical values.

11. The system of claim 10, wherein the at least one processing logic is configured, during the training phase, to:

   - obtain a first numerical value $n_1$ in a first data frame corresponding to a first defined value $v_1$ of the possible parameter;
   - obtain a second numerical value $n_2$ in a second data frame corresponding to a second defined value $v_2$ of the possible parameter;
   - for each possible numerical value $n_3$ between the first numerical value and the second numerical value, define possible data frames having said possible numerical value $n_3$, associated with a possible command having a

13

value of the possible parameter equal to:
$$v_3 = v_1 + \frac{n_3 - n_1}{n_2 - n_1} * (v_2 - v_1)$$
.

12. The system of claim 11, wherein at least one of the first value or the second value is a minimum value or a maximum value of the possible parameter.

13. The system of one of claims 6 to 12, wherein the at least one processing logic is configured to define the set of possible data frames as a set of all possible combinations of all possible values of the parameters.

14. The system of any of the preceding claims, wherein said first remote controller is a remote controller comprising said at least one processing logic.

15. The system of any of the preceding claims, wherein, during the training phase, said at least one processing logic configured to detect incorrect data frames.

16. A computer-implemented method (500) comprising:

- receive (510), during a training phase, by at least one receiver of electromagnetic waves (340, 341) of a first remote controller (230) and from a second remote controller (250b) associated to an air conditioning (AC) system (240), electromagnetic waves carrying a plurality of data frames corresponding respectively to a plurality of defined commands of the AC system;
- define (520), during said training phase, from said plurality of data frames corresponding to said plurality of defined commands of the AC system, a set of possible data frames corresponding respectively to a set of possible commands of the AC system defining a protocol of communication with the AC system;
- use (530), during an operating phase, at least emitter of electromagnetic waves (350) of the first remote controller to send to the AC system, upon an input from a user to send one of the possible commands, electromagnetic waves carrying one of the possible data frames corresponding to said one of the possible commands.

17. A computer program product comprising computer code instructions which, when the program is executed by the system of one of claims 1 to 15, cause the system to carry out the steps of the method of claim 16.

# Fig. 1

# Fig. 2a

# Fig. 2b

# Fig. 3

# Fig. 4

# Fig. 5

510 — Receive data frames

520 — Define possible data frames

500 —

530 — Use possible data frames

Europäisches
Patentamt

European
Patent Office

Office européen
des brevets

# EUROPEAN SEARCH REPORT

Application Number

EP 21 30 6833

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/174467 A1 (DRIMUSZ LASZLO [US] ET AL) 24 July 2008 (2008-07-24) | 1-4,6, 8-10, 13-17 | INV. G08C17/00 F24F11/56 |
| Y | * paragraph [0019] – paragraph [0034] * | 5,7 | |
| A | * paragraph [0037] – paragraph [0038] * * paragraph [0044] * ----- | 11,12 | |
| Y | US 2016/197772 A1 (BRITT JOE [US] ET AL) 7 July 2016 (2016-07-07) * paragraph [0053] – paragraph [0054] * * paragraph [0059] – paragraph [0064] * ----- | 5,7 | |

TECHNICAL FIELDS
SEARCHED      (IPC)

G08C
F24F

The present search report has been drawn up for all claims

| Place of search | Date of completion of the search | Examiner |
|---|---|---|
| The Hague | 7 June 2022 | Baas, Gert-Jan |

EPO FORM 1503 03.82 (P04C01)

## ANNEX TO THE EUROPEAN SEARCH REPORT
## ON EUROPEAN PATENT APPLICATION NO.

EP 21 30 6833

This annex lists the patent family members relating to the patent documents cited in  the above-mentioned European search report.
The members are as contained in the European Patent Office EDP file on
The European Patent Office is in no way liable for these particulars which are merely given for the purpose of information.

07-06-2022

| Patent document cited in search report | | Publication date | Patent family member(s) | | Publication date |
|---|---|---|---|---|---|
| US 2008174467 | A1 | 24-07-2008 | CN | 101589414 A | 25-11-2009 |
| | | | EP | 2126870 A1 | 02-12-2009 |
| | | | HK | 1132574 A1 | 26-02-2010 |
| | | | US | 2008174467 A1 | 24-07-2008 |
| | | | WO | 2008091778 A1 | 31-07-2008 |
| US 2016197772 | A1 | 07-07-2016 | NONE | | |

EPO FORM P0459

For more details about this annex : see Official Journal of the European Patent Office, No. 12/82